# EUROPEAN PATENT SPECIFICATION

(11) **EP 0 577 563 B1**
(45) Date of publication and mention of the grant of the patent: **13.03.1996**
(21) Application number: 93830175.1
(22) Date of filing: 26.04.1993
(51) Int. Cl.: C02F 1/04, C02F 1/32

(54) **Method and apparatus for the removal of residues of chlorinated solvent from contact waters formed during the drying stage in machines for the dry-cleaning of garments**
Verfahren und Vorrichtung zum Entfernen von chlorierten Lösungsmittelrückständen aus diese enthaltenden, bei der Trocknungstufe in Trockenreinigungsmaschinen für Kleidung entstehenden Abwässern.
Procédé et dispositif pour l'élimination des résidus de solvant chloré des eaux produites pendant le séchage dans des machines de nettoyage à sec de vêtements

(30) Priority: 14.05.1992 IT FI920104
(43) Date of publication of application: 05.01.1994
(73) Proprietor: RENZACCI S.P.A. INDUSTRIA LAVATRICI, I-06012 Cittá di Castello (Perugia) (IT)
(72) Inventor: Renzacci, Gabrio, I-06012 Citta' Di Castello (Perugia) (IT)
(74) Representative: Bardini, Marco Luigi

(56) References cited:
- EP-A- 0 114 579
- EP-A- 0 360 941
- DE-A- 3 903 549
- US-A- 3 269 539
- US-A- 4 640 769
- DATABASE WPI Week 8602, Derwent Publications Ltd., London, GB; AN 86-011544 & JP-A-60 236 695 (SANYO ELECTRIC KK) 25 November 1985

## Description

The present invention relates to the field of the cleaning of garments, in particular suits and articles of clothing in general, and more precisely refers to a method for the removal from contact waters of residues of chlorinated solvent formed during the drying step in machines for the dry-cleaning of garments.

The invention also relates to an apparatus operating according to the above mentioned method.

As known, machines for the dry-cleaning of garments normally used at dry-cleaners and in similar businesses, utilize chlorinated solvents such as perchloroethylene, a highly volatile washing agent. In modern washing machines of this type, the solvent is used in a closed cycle for economic reasons as well as for its polluting power and is periodically regenerated.

The solvent is recovered during both the steps of the washing and drying steps of the garments. In fact a portion of the washing solvent soaks the garments again at the end of the washing step and is removed with the drying, in the amount of about 0.35 kg of solvent per 1 kg of washed garments. In this step the humidity which all fabrics, though in different amounts, absorb from the surrounding environment is extracted. The water extracted from the fabrics in the amount of 0.03-0.04 kg per kg of garments as a function of atmospheric humidity, the so-called contact water, and the solvent are collected in a tank in which the separation of the two phases occurs due to the difference in their density. The contact water, lighter than the solvent, collects in the upper part of the tank and leaves the tank through an overflow. Since the contact water still contains residues of chlorinated solvent in considerable quantities, about of 400-500 ppm., its disposal is problematic in that the concentration of solvent is higher than that allowed by anti-pollution laws presently in force. Currently, therefore, contact waters cannot be dispersed in the environment as they are, but must be collected and periodically delivered to specialized firms which handle their treatment.

The object of the present invention is to provide a method for the purification of the above mentioned contact waters so that their chemo-physical properties fall within the limits dictated by the laws presently in force and can therefore be disposed of without problems.

A further object of the present invention is to provide a apparatus for the purification of the above mentioned contact waters, in such a way that their chemical-physical characteristics meet the figures requested by the current regulatins and therefore the contact waters would be in condition of being disposed without inconveniences. Another object of the present invention is to provide an apparatus for the purification of the contact waters, operating according to the method of the invention, suited for being mounted in, or in any case connected to, a garment dry-cleaning machine operating with a chlorinated solvent.

These objects are achieved with the method according to the present invention wherein the contact water originating from the drying stage, separated by decanting from the chlorinated solvent, but still containing the residues of said solvent, is evaporated with the solvent residue and subjected to irradiation with ultraviolet radiation before being discharged into the atmosphere. In this way, as a result of the ultraviolet radiation, the breaking of the chlorine-carbon bond is achieved with the formation of atomic and molecular chlorine together with molecules of ethane and of carbon which in part reacts with atmospheric oxygen, the discharge into the atmosphere of which, given the small percentages present, remains within allowed limits.

The apparatus according to the present invention comprises means for separating the solvent from the contact waters and means for evaporating the contact waters and the solvent residues still contained in them associated with a source of ultraviolet radiation suited to irradiate the vapors produced before their discharge into the atmosphere.

Further characteristics and advantages of the method and the apparatus for the removal of residues of chlorinated solvent from contact waters in the processes of garment dry-cleaning according to the present invention will be made apparent in the following description of one of its possible embodiments, given as an example, but not limitative, with reference to the attached drawing in which:

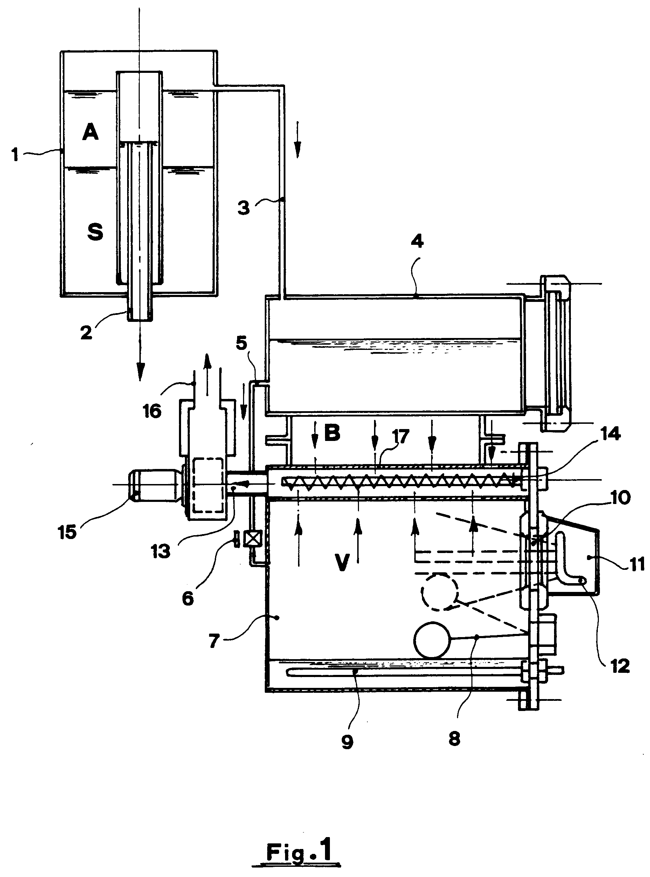

- Figure 1 is a schematic cutaway view of the apparatus which is the object of this invention.

With reference to the above mentioned drawing, 1 indicates a collection tank for the contact water and the chlorinated solvent resulting from the drying of a load of clothing in a dry-cleaning machine of a conventional type not shown. As known to technicians in the field, the separating tank 1 is already present in conventional dry-cleaning machines. As a result of the difference in density the contents of the tank 1 separate into an organic phase, indicated by S, constituted by the chlorinated solvent and an acqueous phase, indicated by A, essentially constituted by the contact waters of the fabrics and containing residues of chlorinated solvent. While the organic phase is discharged through a siphon 2 and recycled to the tank of the solvent (not shown), the aqueous phase is sent through an overflow duct 3 to a buffer tank 4 communicating through the conduit 5, intercepted by an electrovalve 6, with a steaming chamber 7 placed under the buffer tank 4. The opening and closing of the electrovalve 6, which controls the inflow of the contact water from the chamber 4 to the steaming chamber 7, is controlled by a level controller 8 placed inside it. On the floor of the steaming chamber 7 an electrical resistance 9 is provided for which is able to provide a sufficient amount of heat to boil the water and the solvent residues contained in it. On the side wall of the steaming chamber 7 a window 10 is formed closed by a plate of quartz glass in corrispondence with which is externally mounted a housing 11 for an ultraviolet ray lamp 12 (for example model BTG.,110 cp, 250 nm, 13 w, or their equivalent even of different power). The window 10 is situated, with respect to the floor of the steaming chamber 7, at a level which is higher than the maximum level of liquid allowed by the level controller 8 in the chamber 7. In this way the ultraviolet radiation emitted from the lamp 12 hits transversally the flow of steam and solvent vapor, indicated by V, which rises towards the cealing of the chamber 7. The molecule of chlorinated solvent (for example perchloroethylene), hit by the ultraviolet radiation, dissociates freeing gaseous chlorine.

In the upper portion of the steaming chamber 7, from which the vapor discharge conduit 13 departs, another electrical resistance 14 is installed for the superheating of the vapors to be discharged into the atmosphere. On the discharge conduit 13, an aspirator 15 is installed to aspirate the superheated vapors from the chamber 7 and convey them to a stack 16.

Advantageously the vapors coming from the steaming chamber 7, before being superheated, are mixed with fresh air, indicated by the arrows B, which is aspirated through slits 17 formed in the ceiling of the chamber 7 in proximity to the resistance 14, with the object of reducing the formation of condensates in the stack 16 to a minimum.

As a non-limitative example the aspirator can have a capacity of 10-11 m³/h, wheras a temperature of 100°C is sufficient for the air/steam flow to avoid condensation. To this end the surface temperature of the upper electrical resistance 14 must not be lower than 140°C. In order to obtain sufficient exposure of the vapor current to the ultraviolet radiation, the equipment has been designed for an evaporation capacity of 1.5 l/h. In the above mentioned conditions for washing machines having capacities up to 10 kg of clothing the evaporation of the contact waters can be executed about every 10 washing cycles. Clearly, for machines with greater capacities the frequency will be correspondingly lower. It is also possible to execute the evaporation at each cycle.

The apparatus according to the present invention will be able to be incorporated in the new garment dry-cleaning machines, or, for the existant machines, it may be provided as a separate unit to be connected to them by means of the conduit 3. In any case, the apparatus proves particularly advantageous because, with a very limited increase in the cost of installation and operation the burdensome problem of the disposal of the contact water is resolved.

## Claims

1. Method for the removal of residues of chlorinated solvent from contact waters which, in the process of garment dry-cleaning, are extracted from the garment together with the solvent during the drying phase and subsequently separated from the solvent by decanting, characterized by the fact that the decanted water containing residues of chlorinated solvent is made to evaporate and the vapors thus produced are irradiated with ultraviolet radiation and then discharged into the atmosphere.

2. Method according to claim 1, in which the irradiated vapors are superheated before their discharge into the atmosphere.

3. Method according to claims 1 and 2, in which the irradiated vapors are mixed with fresh air before their superheating and discharge into the atmosphere.

4. An apparatus for the removal of residues of chlorinated solvent from contact waters extracted together with said solvent from garments during the drying step in garment dry-cleaning machines, comprising means for separating the solvent from said contact waters and characterized by the fact that it comprises means for the evaporation of said contact waters located inside a evaporation chamber communicating with said separating means and a source of ultraviolet radiation irradiating the vapor produced inside said chamber, there being further provided means for conveying the irradiated vapors to the stack.

5. Apparatus according to claim 4, in which said means of evaporation comprises an electrical resistance installed on the floor of said chamber.

6. Apparatus according to claims 4 and 5, in which said source of ultraviolet radiation is placed in a housing external to said chamber in correspondance with a window formed on one of its side walls at a level higher than the maximum level reacheable by said contact water within said chamber.

7. Apparatus according to claim 6, in which said window is shielded by a quartz glass.

8. Apparatus according to claims 4 to 7, in which in the upper part of said chamber means are provided for superheating the vapors produced in the chamber.

9. Apparatus according to claims 4 to 8, in which in the upper part of said chamber, in proximity to said means of superheating, there are provided passages for the entry of external air to be mixed with said vapors before their superheating are provided for.

10. Apparatus according to claims 4 to 9, in which between said steaming chamber and said separating means a buffer tank for the contact waters is provided for.

## Patentansprüche

1. Verfahren zum Entfernen von chlorierten Lösungsmittelrückständen aus Kontaktwassern, die bei der Trockenreinigung von Kleidungsstücken während der Trocknungsphase zusammen mit dem Lösungsmittel aus den Kleidungsstücken extrahiert und anschließend durch Dekantieren vom Lösungsmittel getrennt werden, dadurch gekennzeichnet, daß das Reste des chlorierten Lössungsmittels enthaltende dekantierte Wasser zum Verdampfen gebracht wird und die so gebildeten Dämpfe mit ultravioletten Strahlen bestrahlt werden und dann in die Atmosphäre entlassen werden.

2. Verfahren nach Anspruch 1, dadurch gekennzeichnet, daß die bestrahlten Dämpfe überhitzt werden, ehe sie in die Atmosphäre entlassen werden.

3. Verfahren nach den Ansprüchen 1 und 2, dadurch gekennzeichnet, daß die bestrahlten Dämpfe mit frischer Luft gemischt werden, ehe sie überhitzt und in die Atmosphäre entlassen werden.

4. Vorrichtung zum Entfernen von chlorierten Lösungsmittelrückständen aus Kontaktwassern, die während der Trockenreinigung von Kleidungsstücken in Maschinen zum Trockenreinigen von Kleidungsstücken während der Trocknungsphase zusammen mit dem Lösungsmittel aus den Kleidungsstücken extrahiert werden, mit einem Mittel zum Trennen des Lösungsmittels von den Kontaktwassern und gekennzeichnet dadurch, daß sie ein Mittel zum Verdampfen der Kontaktwasser auf der Innenseite einer Verdampfungskammer in Verbindung mit dem Trennmittel und eine Quelle für Ultraviolettstrahlen innerhalb der Verdampfungskammer zum Bestrahlen des Dampfes aufweist, wobei ferner ein Mittel zum Überführen der bestrahlten Dämpfe in einen Kamin vorgesehen ist.

5. Vorrichtung nach Anspruch 4, wobei das Verdampfungsmittel einen elektrischen Widerstand einschließt, der auf dem Kammerboden angeordnet ist.

6. Vorrichtung nach Anspruch 4 oder 5 bei der die Quelle für ultraviolette Strahlen in einem Gehäuse angeornet ist, das außerhalb der Kammer einem Fenster in deren Seitenwand in einer Höhe zugeordnet ist, die über dem erreichbaren Niveau des Kontaktwassers in der Kammer liegt.

7. Vorrichtung nach Anspruch 6, bei der das Fenster durch ein Quarzglas abgedeckt ist.

8. Vorrichtung nach den Ansprüchen 4 bis 7, bei der im oberen Teil der Kammer ein Mittel zum Überhitzen der in der Kammer erzeugten Dämpfe vorgesehen ist.

9. Vorrichtung nach den Ansprüchen 4 bis 8, bei der im oberen Teil der Kammer, in der Nähe des Überhitzungsmittels Fluidführungen zum Anbringen externer Luft vorgesehen sind, die den Dämpfen zuzumischen ist, ehe deren Überhitzung bewirkt wird.

10. Vorrichtung nach den Ansprüchen 4 bis 9, bei der zwischen der Verdampfungskammer und dem Trennmittel ein Puffertank für Kontaktwasser vorgesehen ist.

## Revendications

1. Procédé pour l'élimination des résidus de solvant chloré des eaux de contact qui, pendant le nettoyage à sec de vêtements, sont extraites des vêtements en même temps que le solvant pendant la phase de séchage et ensuite séparées du solvant par décantation, caractérisé par le fait que l'eau décantée contenant des résidus de solvant chloré est évaporée et que les vapeurs ainsi produites sont irradiées avec un rayonnement ultraviolet puis envoyées dans l'atmosphère.

2. Procédé selon la revendication 1, dans lequel les vapeurs irradiées sont surchauffées avant d'être envoyées dans l'atmosphère.

3. Procédé selon les revendications 1 et 2, dans lequel les vapeurs irradiées sont mélangées avec de l'air frais avant d'être surchauffées et envoyées dans l'atmosphère.

4. Un dispositif pour l'élimination des résidus de solvant chloré des eaux de contact extraites des vêtements en même temps que ledit solvant pendant le séchage dans des machines de nettoyage à sec de vêtements, comprenant des moyens pour séparer le solvant des dites eaux de contact et caractérisé par le fait qu'il comprend des moyens pour évaporer lesdites eaux de contact situés dans une chambre d'évaporation communiquant avec lesdits moyens de séparation et une source de rayonnement ultraviolet pour irradier la vapeur produite à l'intérieur de ladite chambre, dans lequel il est en outre prévu des moyens pour amener les vapeurs irradiées vers la cheminée.

5. Dispositif selon la revendication 4, dans lequel lesdits moyens d'évaporation comprennent une résistance électrique disposée sur le sol de ladite chambre.

6. Dispositif selon les revendications 4 et 5, dans lequel la source de rayonnement ultraviolet est située dans un logement externe à ladite chambre communiquant avec elle par une fenêtre aménagée dans sa paroi à un niveau supérieur au niveau maximum que peut atteindre l'eau de contact dans ladite chambre.

7. Dispositif selon la revendication 6, dans lequel ladite fenêtre est protégée par une vitre en quartz.

8. Dispositif selon les revendications 4 à 7, dans lequel la partie supérieure desdits moyens de chambre comporte des moyens pour surchauffer les vapeurs produites dans la chambre.

9. Dispositif selon les revendications 4 à 8, dans lequel, dans la partie supérieure de ladite chambre, à proximité desdits moyens pour surchauffer, sont réalisés des passages pour l'entrée d'air extérieur pour être mélangé avec lesdites vapeurs avant qu'elles ne soient surchauffées.

10. Dispositif selon les revendications 4 à 9, dans lequel il est prévu, entre ladite chambre de vaporisation et lesdits moyens de séparation, un volume tampon pour les eaux de contact.
